# EUROPEAN PATENT SPECIFICATION

(11) **EP 1 622 427 B1**
(45) Date of publication and mention of the grant of the patent: **25.11.2009**
(21) Application number: 05011864.5
(22) Date of filing: 01.06.2005
(51) Int. Cl.: H05B 33/08

(54) **Methods and apparatus for setting the color point of an led light source**
Verfahren und Vorrichtung zur Einstellung des Farbpunkts einer Leuchtdiodenlampe
Méthode et appareil d'établir le point de couleur d'une source lumineuse à diodes électroluminescentes

(30) Priority: 28.07.2004 US 902409
(43) Date of publication of application: 01.02.2006
(73) Proprietor: Avago Technologies ECBU IP (Singapore) Pte. Ltd., Singapore 768923 (SG)
(72) Inventor: Lee, Joon Chok, 93150 Kuching, Sarawak (MY); Lim, Len Li Kevin, 34000 Taiping, Perak (MY); Jaffar, Rizal Bin, 78300 Masjid, Tanah Melaka (MY)
(74) Representative: Dilg, Haeusler, Schindelmann Patentanwaltsgesellschaft mbH

(56) References cited:
- EP-A- 1 113 709
- WO-A-02/076150
- WO-A-02/080625
- WO-A-02/082863
- WO-A-03/032689
- WO-A-03/037042
- WO-A-03/053111
- US-A1- 2002 047 624
- US-A1- 2003 111 533
- US-A1- 2004 066 651

## Description

### Background

Light from a plurality of light emitting diodes (LEDs) of different colors (e.g., red, green and blue) has been used to create a light source of predetermined spectral balance (e.g., a "white" light source). See, for example, the United States patent #6,448,550 of Nishimura entitled "Method and Apparatus for Measuring Spectral Content of LED Light Source and Control Thereof. At times, a user may wish to set the color point of an LED light source - especially in applications such as liquid crystal display (LCD) backlighting and decorative lighting.

EP 1 113 709-A2 discloses a circuit diagram of a light control type LED lighting equipment. The lightening equipment comprises a color tone input means for inputting a command for independently controlling luminance of a red LED group, a green LED group and a blue LED group. Color tone control is performed by a pulse width modulation method on the basis of the color tone control signal.

WO 03/037042 relates to an an LED luminary control system including red, green and blue (RGB) light emitting diodes (LEDs) driven by forward currents to produce a mixed color light includes: a feedback unit which generates feedback values representative of the mixed color light produced by said LED luminary, said feedback values corresponding to output signals of a photodiode ; and a controller which acquires a difference between said feedback values and reference values representative of a desired mixed color light, said controller adjusting said forward currents in accordance with said difference.

### Summary of the Invention

A first method comprises receiving a user-selected color point. Red, green and blue (RGB) tristimulus values are then derived for the user-selected color point, with the RGB tristimulus values being dependent on a color sensing system of an LED light source. It is also determined whether the user-selected color point is outside a color selection range of the LED light source and, if so, an error flag is set. Pulse width modulated signals for a plurality of LED drivers for the LED light source are also generated.

A second method comprises receiving tristimulus values representing a color of light produced by an LED light source. The received tristimulus values are then compared to a user-identified color point. In response to the comparison, pulse width modulated signals are generated for a plurality of LED drivers for the LED light source. After a predetermined number of repetitions of these actions, an error flag is set if the user-selected color point has not been achieved by the LED light source.

An integrated circuit for controlling an LED light source comprises an interface for receiving a user-selected color point specified in a device independent color space, a memory for storing an indication of said user-selected color point, and a controller. The controller is configured to 1) derive RGB tristimulus values for the user-selected color point, 2) determine whether the user-selected color point is outside a color selection range of the LED light source and, if so, set an error flag, and 3) in response to the RGB tristimulus values, generate pulse width modulated signals for a plurality of LED drivers for the LED light source.

Other embodiments of the invention are also disclosed.

### Brief Description of the Drawings

Illustrative and presently preferred embodiments of the invention are illustrated in the drawings, in which:

FIGS. 1, 3 & 4 illustrate alternate exemplary methods for setting the color point of an LED light source;

FIG. 2 illustrates a 1931 CIE Chromaticity Diagram; and

FIG. 5 illustrates an integrated circuit having a controller for setting the color point of an LED light source.

### Detailed Description of an Embodiment

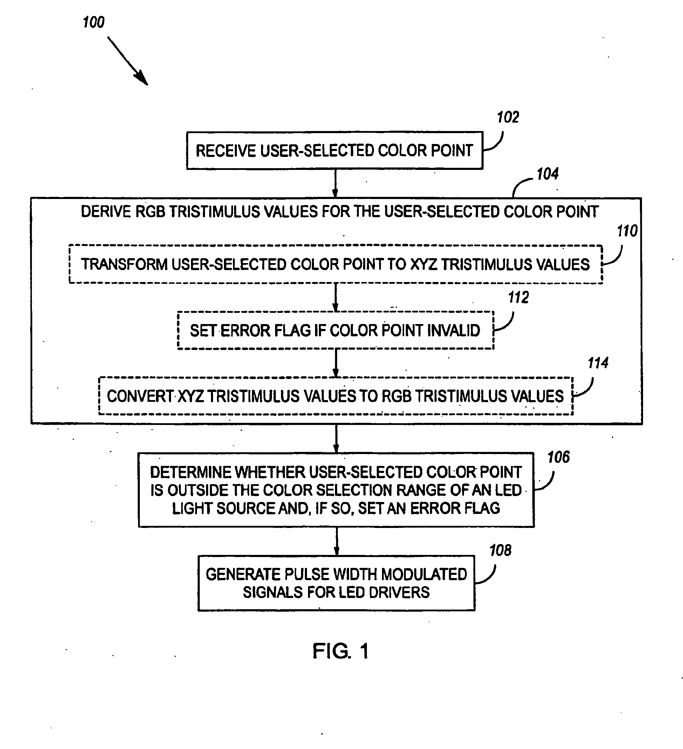

FIG. 1 illustrates a first exemplary method 100 for setting the color point of an LED light source. The method 100 begins with the receipt 102 of a user-selected color point. A user may specify the color point in a variety of ways, and may often specify the color point in a device independent color space such as a 1931 Commission Internationale de l'Éclairage (CIE) XYZ color space, a Yxy color space, an RGB color space, or a 1976 Yu'v' color space. Device independent color spaces often provide a wide range of colors from which a user may select a color point. In some cases, the user may provide the color point by clicking (e.g., with a mouse) on a color representing a desired color point. In other cases, the user may input specific luminance and chrominance values.

After receiving the user-selected color point, the method 100 continues with the derivation 104 of RGB tristimulus values (e.g., new RGB colorimetric tristimulus values) for the user-selected color point. Unlike the received color point, which may be device independent, the derived RGB tristimulus values will be dependent on the color sensing system of the LED light source.

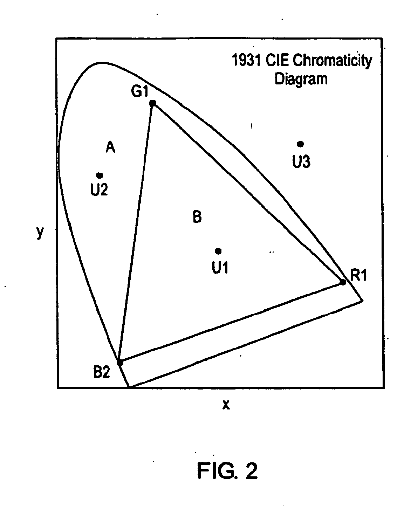

When deriving the RGB tristimulus values, it is determined 106 whether the user-selected color point is outside the color selection range of the LED light source. The color selection range of an LED light source is the set of all possible color points that may be produced by the light source. By way of example, FIG. 2 provides a 1931 CIE Chromaticity Diagram (with the 1931 CIE color space being represented by the bounded area A). If a light source is comprised of RGB LEDs having respective wavelengths of R1, G1 and B1, then the color selection range of the RGB light source is represented by the triangular area B. Point U1 represents a user-selected color point that is within the color selection range of the RGB light source, and point U2 represents a user-selected color point that is outside the color selection range of the RGB light source. If a user-selected color point is determined to be outside the color selection range of an LED light source, an error flag may be set 106. The error flag may then be retrieved by the user, or the user's software or control device, such as a microcontroller or computer. Alternately, a control system associated with the LED light source may notify the user that the error flag has been set (e.g., by sending an alert to the user's software or computer).

By way of example, RGB tristimulus values may be derived from the user-selected color point by first transforming 110 the user-selected color point into XYZ tristimulus values (e.g., CIE 1931 XYZ tristimulus values). These XYZ tristimulus values may then be converted 114 into RGB tristimulus values using a conversion matrix. By way of example, one way to determine whether the user-selected color point is outside the color selection range of the LED light source is via a mathematical equation based on the LED light source's color coordinates and the user-selected color point.

During transformation 110 of the user-selected color point, it may be determined whether the user-selected color point is invalid. With reference to the 1931 CIE color space shown in FIG. 2, point U3 would be an invalid color point, as it is outside of the 1931 CIE color space. If a user-selected color point is determined to be invalid, an error flag may be set 112.

The method 100 continues with the generation 108 of pulse width modulated signals for a plurality of LED drivers for an LED light source.

Using the method 100, a user may select an LED light source's color point in a device independent color space which is easy for the user to comprehend, and then receive an error notification if the selected color point is invalid or unachievable.

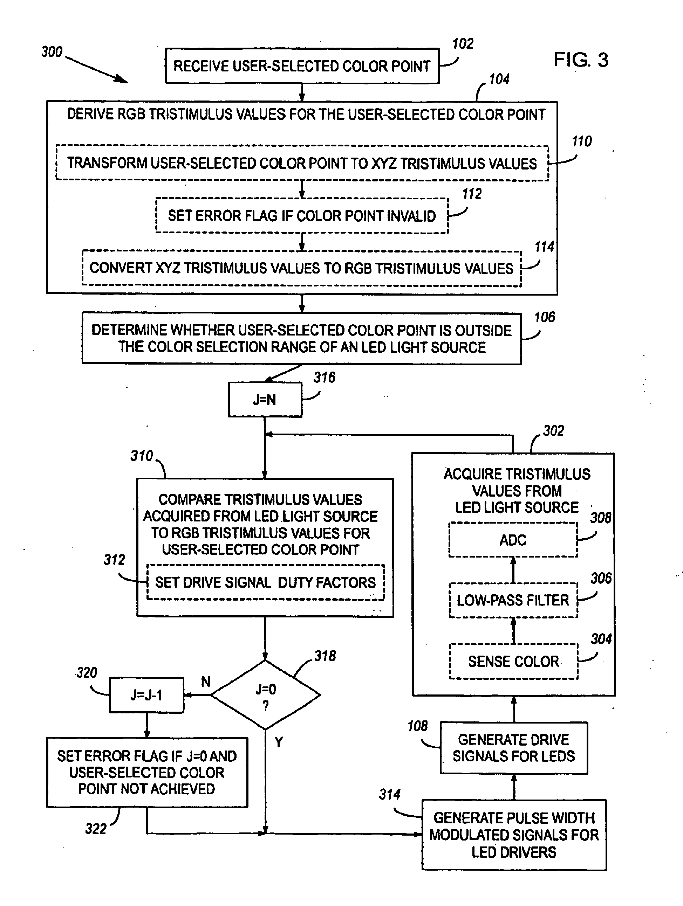

FIG. 3 illustrates a second exemplary method 300 for setting the color point of an LED light source. The method 300 extends the method 100 by providing details as to how an LED light source is controlled using a user-selected color point. In the method 300, a set of tristimulus values representing a color of light produced by an LED light source are acquired 302. By way of example, this may be accomplished by means of a color sensor 304, low-pass filter 306 and analog-to-digital converter (ADC) 308. The color sensor 304 may comprise three filtered photodiodes that receive incident light from the light source's LEDs. For example, for a light source comprised of red, green and blue LEDs, three photodiodes may be respectively provided with color filters for red, green and blue light. In this manner, the different photodiodes may sense different wavelengths of light. The color sensor 304 may also comprise amplifier circuitry to convert photonic light readings to output voltages. The low-pass filter 306 may be used to average the sensor's output voltages and provide low-ripple direct current (DC) output voltages that correspond to the time average of the sensor's output voltages. The ADC 308 may then convert the DC output voltages to digital representations thereof.

The method 300 continues with a comparison 310 of the tristimulus values acquired from the light source to the RGB tristimulus values for the user-selected color point. In response to the comparison 310 of tristimulus values, pulse width modulated signals for LED drivers are generated 108. For example, as a byproduct of comparing tristimulus values, drive signal duty factors may be set 312 for the LEDs (e.g., by looking them up, calculating them, or by basing them on a fixed increment/decrement over previous duty factors). The duty factors may then be used to generate 108 pulse width modulated signals for the LED drivers. Depending on the nature of the LED light source, a set of drive signals may be then be generated 314 for the light source as a whole (e.g., a single set of red, green and blue drive signals), or sets of drive signals may be generated for various groups of the light source's LEDs.

In one embodiment of the method 300, pulse width modulated signals are generated for LED drivers so as to cause the tristimulus values acquired from an LED light source to match the tristimulus values corresponding to the user-identified color point. In an alternate embodiment of the method 300, pulse width modulated signals are generated for LED drivers so as to cause the tristimulus values acquired from an LED light source to fall within an accepted range of tristimulus values (i.e., a range of tristimulus values about the tristimulus values corresponding to the user-identified color point).

The method 300 further comprises an optional error-reporting routine 316, 318, 320, 322. By means of the error-reporting routine 316-322, the method 300 1) receives tristimulus values from the LED light source, 2) compares 310 the tristimulus values to those corresponding to user-selected color point, and 3) generates 108 pulse width modulated signals for LED drivers for a predetermined number of repetitions. After the predetermined number of repetitions (i.e., J=0), the method 300 sets 322 an error flag if the user-selected color point has not been achieved by the LED. light source.

Using the method 300, the color point of the combined light produced by a plurality of LEDs may be maintained even though individual LEDs are subject to manufacturing variance, or drift in their light output as a result of temperature, aging and other effects.

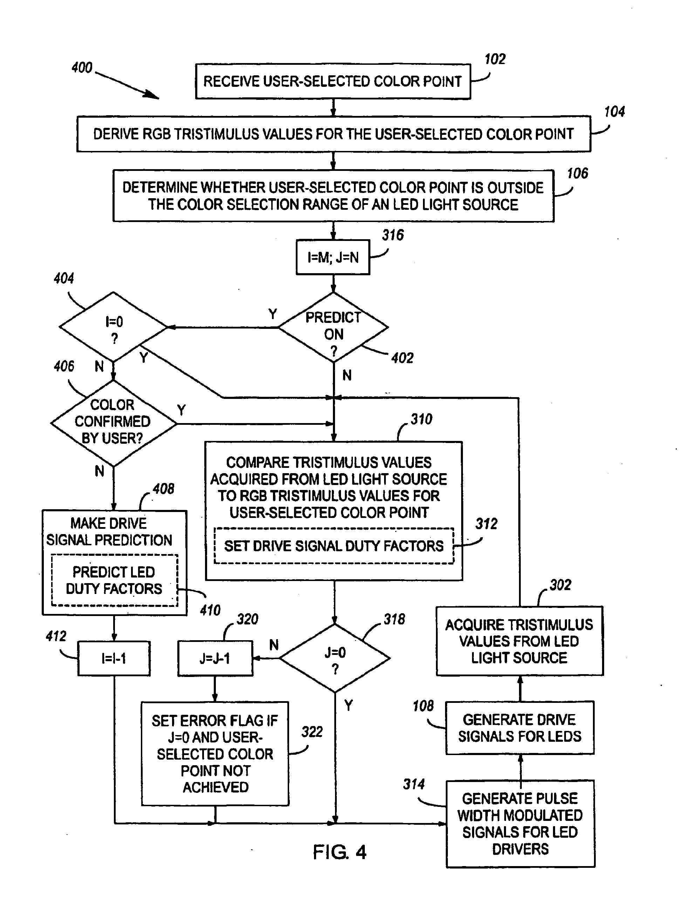

FIG. 4 illustrates a third exemplary method 400 for setting the color point of an LED light source. The method 400 extends the method 300 by providing a color point prediction routine 402, 404, 406, 408, 410, 412. If the prediction routine is active, drive signals generated for a light source's LEDs are based on predicted 408 pulse width modulated signals, rather than on a comparison 310 of acquired and desired tristimulus values. In one embodiment, the drive signal prediction 408 comprises a predication of LED duty factors 410. These duty factors may be predicted by, for example, looking them up in a table, or calculating them using a conversion matrix. Predicted pulse width modulated signals are then maintained for a predetermined period (e.g., until I=0). Optionally, if a user confirms 406 their color point selection, the prediction routine 402-412 may be exited. Once the prediction routine 402-412 is exited, drive signals for an LED's light source may be generated in response to a comparison 310 of acquired and desired tristimulus values.

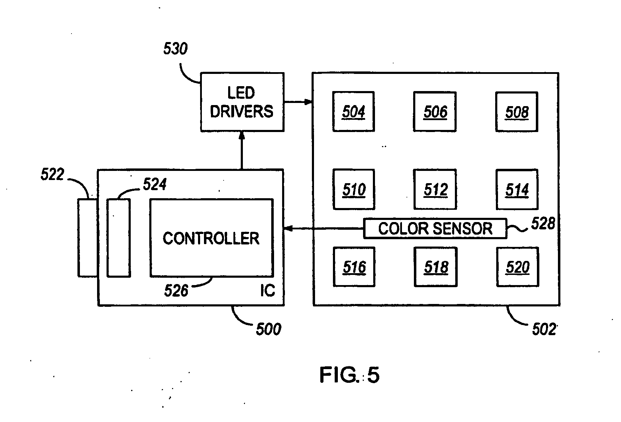

FIG. 5 shows an integrated circuit 500 for controlling an LED light source 502. In one embodiment, the LED light source 502 comprises red, green and blue LEDs 504-520. However, the LED light source could also comprise additional and/or other colors of LEDs. Further, the LED light source could take various forms, such as that of a display backlight, accent lighting, or other form of light source.

As shown, the integrated circuit 500 comprises an interface 522 for receiving a user-selected color point. By way of example, the interface 522 may comprise an Inter-IC (I²C) or System Management Bus (SMBus) interface. A user-selected color point may be received via such an interface by coupling the interface to a control device such as the user's computer, a microcontroller, or one or more control switches (e.g., buttons or sliders).

The integrated circuit 500 also comprises a memory 524 for storing an indication of the user-selected color point. In some embodiments, the memory 524 may be a random access memory (RAM) or an electrically erasable programmable read-only memory (EEPROM). The indication of the user-selected color point may variously comprise the user-selected color point (e.g., in the form of chrominance and luminance values), or tristimulus values or intermediate data based thereon.

The integrated circuit 500 further comprises a controller 526. In one embodiment, the controller 526 is configured to 1) derive RGB tristimulus values for the user-selected color point, 2) determine whether the user-selected color point is outside the color selection range of the LED light source 502 and, if so, set an error flag, and 3) in response to the RGB tristimulus values, generate drive signals for a plurality of LEDs 504-520 forming the LED light source 502. In another embodiment, the controller 526 is configured to 1) receive tristimulus values representing a color of light produced by the LED light source 502, 2) compare the received tristimulus values to desired tristimulus values, 3) in response to this comparison, generate pulse width modulated signals for the LEDs 504-520, and 4) repeat the above actions a predetermined number of times, and then set an error flag if the user-selected color point has not been achieved by the LED light source 502. The controller 526 may also be configured to implement any of the methods 100, 300, 400 disclosed herein.

As shown, the controller 526 may receive the tristimulus values representing a color of light produced by the LED light source 502 from a color sensor 528. The color sensor 528 may be a separate device, or may be variously included within (or on) the integrated circuit 500 or display 502.

The pulse width modulated signals produced by the controller 526 may be provided to one or more LED drivers 530 (e.g., three LED drivers to respectively drive the red, green and blue LEDs of the display 502). The LED drivers 530 may be a separate device or devices, or may be variously included within (or on) the integrated circuit 500 or display 502.

## Claims

1. A method (100), comprising:
receiving (102) a user-selected color point;
deriving (104) red, green and blue (RGB) tristimulus values for the user-selected color point; and
in response to the RGB tristimulus values, generating (108) pulse width modulated signals for a plurality of LED drivers for a light emitting diode (LED) light source;
**characterized by**
the RGB tristimulus values being dependent on a color sensing system of said LED light source; and
determining (106) whether the user-selected color point is outside a color selection range of the LED light source and, if so, setting an error flag.

2. The method (100) of claim 1, wherein:
deriving (104) RGB tristimulus values for the user-selected color point comprises:
transforming (110) the user-selected color point into XYZ tristimulus values; and
converting (112) the XYZ tristimulus values into RGB tristimulus values; and
the method further comprises setting (114) an error flag if transformation of the user-selected color point reveals that the user-selected color point is invalid.

3. The method (300) of claim 2, further comprising:
receiving tristimulus values representing a color of light produced by the LED light source;
comparing (310) said received tristimulus values to said RGB tristimulus values;
in response to the comparison, generating (314) said pulse width modulated signals;
repeating said receiving, comparing (310) and generating (314) actions; and
after a predetermined number of repetitions of said receiving, comparing (310) and generating (314) actions, setting (322) an error flag if the user-selected color point has not been achieved by the LED light source.

4. The method (400) of claim 2, further comprising:
if a color point prediction routine (404, 408, 410, 412) is active,
predicting (410, 314) pulse width modulated signals for the LEDs; and
maintaining (404, 412) said predicted pulse width modulated signals for a predetermined period; and
if the color point prediction routine (404, 408, 410, 412) is inactive,
receiving tristimulus values representing a color of light produced by the LED light source;
comparing (310) said received tristimulus values to said RGB tristimulus values;
in response to the comparison, generating (314) said pulse width modulated signals;
repeating said receiving, comparing (310) and generating (314) actions; and
after a predetermined number of repetitions of said receiving, comparing (310) and generating (314) actions, setting (322) an error flag if the user-selected color point has not been achieved by the LED light source.

5. The method (400) of claim 1, further comprising:
if a color point prediction routine (404, 408, 410, 412) is active,
predicting (410, 314) pulse width modulated signals for the LEDs; and
maintaining (404, 412) said predicted pulse width modulated signals for a predetermined period; and
if the color point prediction routine (404, 408, 410, 412) is inactive,
receiving tristimulus values representing a color of light produced by the LED light source;
comparing (310) said received tristimulus values to said RGB tristimulus values;
in response to the comparison, generating (314) said pulse width modulated signals;
repeating said receiving, comparing (310) and generating (314) actions; and
after a predetermined number of repetitions of said receiving, comparing (310) and generating (314) actions, setting (322) an error flag if the user-selected color point has not been achieved by the LED light source.

6. The method (300) of claim 1, further comprising:
receiving tristimulus values representing a color of light produced by the LED light source;
comparing (310) said received tristimulus values to said RGB tristimulus values;
in response to the comparison, generating (314) said pulse width modulated signals;
repeating said receiving, comparing (310) and generating (314) actions; and
after a predetermined number of repetitions of said receiving, comparing (310) and generating (314) actions, setting (322) an error flag if the user-selected color point has not been achieved by the LED light source.

7. A method, comprising:
receiving tristimulus values representing a color of light produced by a light emitting diode (LED) light source;
comparing (310) said received tristimulus values to tristimulus values corresponding to a user-identified color point;
in response to the comparison, generating (314) pulse width modulated signals for a plurality of LED drivers for said LED light source;
repeating said receiving, comparing (310) and generating (314) actions; and
after a predetermined number of repetitions of said receiving, comparing (310) and generating (314) actions, setting (322) an error flag if the user-selected color point has not been achieved by the LED light source.

8. An integrated circuit for controlling a light emitting diode (LED) light source, comprising:
an interface for receiving a user-selected color point;
a memory for storing an indication of said user-selected color point; and
a controller, configured to:
derive (104) red, green and blue (RGB) tristimulus values for the user-selected color point; and
in response to the RGB tristimulus values, generate (108) pulse width modulated signals for a plurality of LED drivers for said LED light source;
**characterized by**
the controller being configured to determine (106) whether the user-selected color point is outside a color selection range of said LED light source and, if so, set an error flag.

9. The integrated circuit of claim 8, wherein the controller is further configured to:
receive tristimulus values representing a color of light produced by the LED light source;
compare (310) said received tristimulus values to said RGB tristimulus values;
in response to the comparison, generate (314) said pulse width modulated signals;
repeat said receiving, comparing (310) and generating (314) actions; and
after a predetermined number of repetitions of said receiving, comparing (310) and generating (314) actions, set (322) an error flag if the user-selected color point has not been achieved by the LED light source.

10. The integrated circuit of claim 8, wherein the controller is further configured to implement a color point prediction routine, wherein:
if the color point prediction routine (404, 408, 410, 412) is active, the controller:
predicts (410, 314) pulse width modulated signals for LEDs of the light source; and
maintains (404, 412) said predicted pulse width modulated signals for a predetermined period; and
if the color point prediction routine (404, 408, 410, 412) is inactive, the controller:
receives tristimulus values representing a color of light produced by the LED light source;
compares (310) said received tristimulus values to said RGB tristimulus values;
in response to the comparison, generates (314) said pulse width modulated signals;
repeats said receiving, comparing (310) and generating (314) actions; and
after a predetermined number of repetitions of said receiving, comparing (310) and generating (314) actions, sets (322) an error flag if the user-selected color point has not been achieved by the LED light source.

## Patentansprüche

1. Verfahren (100) enthaltend:
Empfangen (102) eines Benutzer-gewählten Farbpunktes;
Ableiten (104) von roten, grünen und blauen (RGB) Farbwerten für den Benutzer-gewählten Farbpunkt; und
in Reaktion auf die RGB-Farbwerte, Erzeugen (108) von pulsweitenmodulierten Signalen für eine Vielzahl von LED-Treibern für eine Licht-emittierende-Dioden(LED)-Lichtquelle;
**gekennzeichnet durch**
ein Abhängen der RGB-Farbwerte von einem Farbfühlsystem der LED-Lichtquelle; und
Bestimmen (106), ob der Benutzer-gewählte Farbpunkt außerhalb eines Farbwahlbereiches der LED-Lichtquelle ist und, wenn dies so ist, Setzen eines Fehlerflags.

2. Verfahren (100) nach Anspruch 1, wobei:
das Ableiten (104) der RGB-Farbwerte für den Benutzer-gewählten Farbpunkt aufweist:
Transformieren (110) des Benutzer-gewählten Farbpunktes in XYZ-Farbwerte; und
Konvertieren (112) der XY-Farbwerte in RGB-Farbwerte; und
wobei das Verfahren ferner aufweist, Setzen (114) eines Fehlerflags, wenn die Transformation des Benutzer-gewählten Farbpunktes enthüllt, dass der Benutzer-gewählte Farbpunkt ungültig ist.

3. Verfahren (300) nach Anspruch 2, ferner enthaltend:
Empfangen von Farbwerten, welche eine von der LED-Lichtquelle erzeugte Lichtfarbe repräsentieren;
Vergleichen (310) der empfangenen Farbwerte mit den RGB-Farbwerten;
in Reaktion auf den Vergleich, Erzeugen (314) der pulsweitenmodulierten Signale;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt durch die LED-Lichtquelle nicht erreicht worden ist.

4. Verfahren (400) nach Anspruch 2, ferner enthaltend:
wenn eine Farbpunktvorhersageroutine (404, 408, 410, 412) aktiv ist,
Vorhersagen (410, 314) von pulsweitenmodulierten Signalen für die LEDs; und
Beibehalten (404, 412) der vorhergesagten pulsweitenmodulierten Signale für eine vorbestimmte Zeitdauer; und
wenn die Farbpunktvorhersageroutine (404, 408, 410, 412) inaktiv ist,
Empfangen von Farbwerten, welche eine Farbe von von der LED-Lichtquelle produziertem Licht repräsentieren;
Vergleichen (310) der empfangenen Farbwerte mit den RGB-Farbwerten;
in Reaktion auf den Vergleich, Erzeugen (314) der pulsweitenmodulierten Signale;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt von der LED-Lichtquelle nicht erreicht worden ist.

5. Verfahren (400) nach Anspruch 1, ferner enthaltend:
wenn eine Farbpunktvorhersageroutine (404, 408, 410, 412) aktiv ist,
Vorhersagen (410, 314) von pulsweitenmodulierten Signalen für die LEDs; und
Beibehalten (404, 412) der vorhergesagten pulsweitenmodulierten Signale für eine vorbestimmte Zeitdauer; und
wenn die Farbpunktvorhersageroutine (404, 408, 410, 412) inaktiv ist,
Empfangen von Farbwerten, welche eine Farbe von durch die LED-Lichtquelle erzeugtem Licht repräsentieren;
Vergleichen (310) der empfangenen Farbwerte mit den RGB-Farbwerten;
in Reaktion auf den Vergleich, Erzeugen (314) der pulsweitenmodulierten Signale;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt von der LED-Lichtquelle nicht erreicht worden ist.

6. Verfahren (300) nach Anspruch 1, ferner enthaltend:
Empfangen von Farbwerten, welche eine Farbe von durch die LED-Lichtquelle erzeugtem Licht repräsentieren;
Vergleichen (310) der empfangenen Farbwerte mit den RGB-Fa rbwerten;
in Reaktion auf den Vergleich, Erzeugen (314) der pulsweitenmodulierten Signale;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt durch die LED-Lichtquelle nicht erreicht worden ist.

7. Verfahren enthaltend:
Empfangen von Farbwerten, welche eine Farbe von durch eine Lichtemittierende-Dioden(LED)-Lichtquelle erzeugtes Licht repräsentieren;
Vergleichen (310) der empfangenen Farbwerte mit Farbwerten, welche einem Benutzer-identifizierten Farbpunkt entsprechen;
in Reaktion auf den Vergleich, Erzeugen (314) von pulsweitenmodulierten Signalen für eine Vielzahl von LED-Treibern der LED-Lichtquelle;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt durch die LED-Lichtquelle nicht erreicht worden ist.

8. Integrierte Schaltung zum Steuern einer Licht-emittierenden-Dioden(LED)-Lichtquelle, enthaltend:
eine Schnittstelle zum Empfangen eines Benutzer-gewählten Farbpunktes;
einen Speicher zum Speichern eines Hinweises auf den Benutzer-gewählten Farbpunkt; und
einen Controller, konfiguriert um:
rote, grüne und blaue (RGB) Farbwerte für den Benutzer-gewählten Farbpunkt abzuleiten; und
in Reaktion auf die RGB-Farbwerte, pulsweitenmodulierte Signale für eine Vielzahl von LED-Treibern für die LED-Lichtquelle zu erzeugen (108);
**dadurch gekennzeichnet, dass**
der Controller konfiguriert ist zum Bestimmen (106), ob der Benutzer-gewählte Farbpunkt außerhalb eines Farbauswahlbereiches der LED-Lichtquelle liegt und, wenn dies so ist, Setzen eines Fehlerflags.

9. Integrierte Schaltung nach Anspruch 8, wobei der Controller ferner konfiguriert ist zum:
Empfangen von Farbwerten, welche eine Farbe von durch die LED-Lichtquelle erzeugtem Licht repräsentieren;
Vergleichen (310) der empfangenen Farbwerte mit den RGB-Farbwerten;
in Reaktion auf den Vergleich, Erzeugen (314) der pulsweitenmodulierten Signale;
Wiederholen der Empfangs-, Vergleichs(310)- und Erzeugungs(314)-Aktionen; und
nach einer vorbestimmten Anzahl von Wiederholungen der Empfangs-, Vergleichs(310)- und Erzeugungs(314)-Aktionen, Setzen (322) eines Fehlerflags, wenn der Benutzer-gewählte Farbpunkt durch die LED-Lichtquelle nicht erreicht worden ist.

10. Integrierte Schaltung nach Anspruch 8, wobei der Controller ferner konfiguriert ist zum Implementieren einer Farbpunktvorhersageroutine, wobei:
wenn die Farbpunktvorhersageroutine (404, 408, 410, 412) aktiv ist, der Controller:
pulsweitenmodulierte Signale für LEDs der Lichtquelle vorhersagt; und
die vorhergesagten pulsweitenmodulierten Signale für eine vorbestimmte Zeitdauer beibehält; und
wenn die Farbpunktvorhersageroutine (404, 408, 410, 412) inaktiv ist, der Controller:
Farbwerte, welche eine Farbe von durch die LED-Lichtquelle erzeugtem Licht repräsentieren, empfängt;
die empfangenen Farbwerte mit den RGB-Farbwerten vergleicht (310);
in Reaktion auf den Vergleich, die pulsweitenmodulierten Signale erzeugt (314);
die Empfangs-, Vergleichs(310)- und Erzeugungs(314)-Aktionen wiederholt; und
nach einer vorbestimmten Anzahl von Wiederholungen der Empfangs-, Vergleichs(310)- und Erzeugungs(314)-Aktionen, ein Fehlerflag setzt (322), wenn der Benutzer-gewählte Farbpunkt durch die LED-Lichtquelle nicht erreicht worden ist.

## Revendications

1. Procédé (100), consistant à :
recevoir (102) un point de couleur sélectionné par l'utilisateur ;
dériver (104) des coordonnées trichromatiques RVB (rouge, vert et bleu) pour le point de couleur sélectionné par l'utilisateur ; et
en réponse aux coordonnées trichromatiques RVB, générer (108) des signaux modulés de largeur d'impulsion pour une pluralité de pilotes de DEL pour une source lumineuse à diode électroluminescente (DEL) ;
**caractérisé par le fait que**
les coordonnées trichromatiques RVB sont fonction d'un système de détection de couleurs d'une source lumineuse à diode électroluminescente (DEL) ; et
déterminer (106) si le point de couleur sélectionné par l'utilisateur se trouve en dehors d'une plage de sélection de couleurs de la source lumineuse à DEL et, si tel est le cas, définir un drapeau d'erreur.

2. Procédé (100) selon la revendication 1, dans lequel :
dériver (104) des coordonnées trichromatiques RVB pour le point de couleur sélectionné par l'utilisateur consiste à :
transformer (110) le point de couleur sélectionné par l'utilisateur en coordonnées trichromatiques XYZ ; et
convertir (112) les coordonnées trichromatiques XYZ en coordonnées trichromatiques RVB ; et
le procédé consiste en outre à définir (114) un drapeau d'erreur si la transformation du point de couleur sélectionné par l'utilisateur révèle que le point de couleur sélectionné par l'utilisateur n'est pas valide.

3. Procédé (300) selon la revendication 2, consistant en outre à :
recevoir des coordonnées trichromatiques représentant une couleur de lumière produite par la source lumineuse à DEL ;
comparer (310) lesdites coordonnées trichromatiques reçues auxdites coordonnées trichromatiques RVB ;
en réponse à la comparaison, générer (314) lesdits signaux modulés de largeur d'impulsion ;
répéter lesdites actions consistant à recevoir, comparer (310) et générer (314) ; et
après un nombre prédéterminé de répétitions desdites actions consistant à recevoir, comparer (310) et générer (314), définir (322) un drapeau d'erreur si le point de couleur sélectionné par l'utilisateur n'a pas été obtenu par la source lumineuse à DEL.

4. Procédé (400) selon la revendication 2, consistant en outre :
si une routine (404, 408, 410, 412) de prédiction de point de couleur est active, à
prédire (410, 314) des signaux modulés de largeur d'impulsion pour les LED ; et
maintenir (404, 412) lesdits signaux modulés de largeur d'impulsion prédits pendant une période prédéterminée ; et
si la routine de prédiction de point de couleur (404, 408, 410, 412) est inactive, à
recevoir des coordonnées trichromatiques représentant une couleur de lumière produite par la source lumineuse à DEL ;
comparer (310) lesdites coordonnées trichromatiques reçues auxdites coordonnées trichromatiques RVB ;
en réponse à la comparaison, générer (314) lesdits signaux modulés de largeur d'impulsion ;
répéter lesdites actions consistant à recevoir, comparer (310) et générer (314) ; et
après un nombre prédéterminé de répétitions desdites actions consistant à recevoir, comparer (310) et générer (314), définir (322) un drapeau d'erreur si le point de couleur sélectionné par l'utilisateur n'a pas été obtenu par la source lumineuse à DEL.

5. Procédé (400) selon la revendication 1, consistant en outre :
si une routine (404, 408, 410, 412) de prédiction de point de couleur est active, à
prédire (410, 314) des signaux modulés de largeur d'impulsion pour les LED ; et
maintenir (404, 412) lesdits signaux modulés de largeur d'impulsion prédits pendant une période prédéterminée ; et
si la routine (404, 408, 410, 412) de prédiction de point de couleur est inactive, à
recevoir des coordonnées trichromatiques représentant une couleur de lumière produite par la source lumineuse à DEL ;
comparer (310) lesdites coordonnées trichromatiques reçues auxdites coordonnées trichromatiques RVB ;
en réponse à la comparaison, générer (314) lesdits signaux modulés de largeur d'impulsion ;
répéter lesdites actions consistant à recevoir, comparer (310) et générer (314) ; et
après un nombre prédéterminé de répétitions desdites actions consistant à recevoir, comparer (310) et générer (314), définir (322) un drapeau d'erreur si le point de couleur sélectionné par l'utilisateur n'a pas été obtenu par la source lumineuse à DEL.

6. Procédé (300) selon la revendication 1, consistant en outre à :
recevoir des coordonnées trichromatiques représentant une couleur de lumière produite par la source lumineuse à DEL ;
comparer (310) lesdites coordonnées trichromatiques reçues auxdites coordonnées trichromatiques RVB ;
en réponse à la comparaison, générer (314) lesdits signaux modulés de largeur d'impulsion ;
répéter lesdites actions consistant à recevoir, comparer (310) et générer (314) ; et
après un nombre prédéterminé de répétitions desdites actions consistant à recevoir, comparer (310) et générer (314), définir (322) un drapeau d'erreur si le point de couleur sélectionné par l'utilisateur n'a pas été obtenu par la source lumineuse à DEL.

7. Procédé, consistant à :
recevoir des coordonnées trichromatiques représentant une couleur de lumière produite par une source lumineuse à diode électroluminescente (DEL) ;
comparer (310) lesdites coordonnées trichromatiques reçues à des coordonnées trichromatiques correspondant à un point de couleur sélectionné par l'utilisateur ;
en réponse à la comparaison, générer (314) des signaux modulés de largeur d'impulsion pour une pluralité de pilotes de DEL pour ladite source lumineuse à DEL ;
répéter lesdites actions consistant à recevoir, comparer (310) et générer (314) ; et
après un nombre prédéterminé de répétitions desdites actions consistant à recevoir, comparer (310) et générer (314), définir (322) un drapeau d'erreur si le point de couleur sélectionné par l'utilisateur n'a pas été obtenu par la source lumineuse à DEL.

8. Circuit intégré permettant de commander une source lumineuse à diode électroluminescente (DEL), comprenant :
une interface permettant de recevoir un point de couleur sélectionné par l'utilisateur ;
une mémoire permettant de stocker une indication dudit point de couleur sélectionné par l'utilisateur ; et
un dispositif de commande, configuré pour :
dériver (104) des coordonnées trichromatiques RVB (rouge, vert et bleu) pour le point de couleur sélectionné par l'utilisateur ; et
en réponse aux coordonnées trichromatiques RVB, générer (108) des signaux modulés de largeur d'impulsion pour une pluralité de pilotes de DEL pour ladite source lumineuse à DEL ;
**caractérisé par le fait que**
le dispositif de commande est configuré pour déterminer (106) si le point de couleur sélectionné par l'utilisateur se trouve en dehors d'une plage de sélection de couleurs de ladite source lumineuse à DEL et, si tel est le cas, pour définir un drapeau d'erreur.

9. Circuit intégré selon la revendication 8, dans lequel le dispositif de commande est en outre configuré pour :
recevoir des coordonnées trichromatiques représentant une couleur de lumière produite par la source lumineuse à DEL ;
comparer (310) lesdites coordonnées trichromatiques reçues auxdites coordonnées trichromatiques RVB ;
en réponse à la comparaison, générer (314) lesdits signaux modulés de largeur d'impulsion ;
répéter lesdites actions consistant à recevoir, comparer (310) et générer (314) ; et
après un nombre prédéterminé de répétitions des actions consistant à recevoir, comparer (310) et générer (314), définir (322) un drapeau d'erreur si le point de couleur sélectionné par l'utilisateur n'a pas été obtenu par la source lumineuse à DEL.

10. Circuit intégré selon la revendication 8, dans lequel le dispositif de commande est en outre configuré pour mettre en oeuvre une routine de prédiction de point de couleur, dans laquelle :
si la routine (404, 408, 410, 412) de prédiction de point de couleur est active, le dispositif de commande :
prédit des signaux modulés de largeur d'impulsion (410, 314) pour des DEL de la source lumineuse ; et
maintient (404, 412) lesdits signaux modulés de largeur d'impulsion (404, 412) pendant une période prédéterminée ; et
si la routine (404, 408, 410, 412) de prédiction de point de couleur est inactive, le dispositif de commande :
reçoit des coordonnées trichromatiques représentant une couleur de lumière produite par la source lumineuse à DEL ;
compare (310) lesdites coordonnées trichromatiques reçues auxdites coordonnées trichromatiques RVB ;
en réponse à la comparaison, génère (314) lesdits signaux modulés de largeur d'impulsion ;
répète lesdites actions consistant à recevoir, comparer (310) et à générer (314) ; et
après un nombre prédéterminé de répétitions desdites actions consistant à recevoir, comparer (310) et à générer (314), définit (322) un drapeau d'erreur si le point de couleur sélectionné par l'utilisateur n'a pas été obtenu par la source lumineuse à DEL.
